# EUROPÄISCHE PATENTSCHRIFT

(11) **EP 0 602 342 B1**
(45) Veröffentlichungstag und Bekanntmachung des Hinweises auf die Patenterteilung: **22.05.1996**
(21) Anmeldenummer: 93116700.1
(22) Anmeldetag: 15.10.1993
(51) Int. Cl.: B60R 7/08

(54) **In ein Fahrzeug einbaubarer Behälter mit Aufnahmefach**
Box with cavity for installation within vehicles
Boîte avec une cavité pour installation dans des véhicules

(30) Priorität: 11.12.1992 DE 9216892 U
(43) Veröffentlichungstag der Anmeldung: 22.06.1994
(73) Patentinhaber: fischerwerke Artur Fischer GmbH & Co. KG, D-72178 Waldachtal (DE)
(72) Erfinder: Nehl, Wolfgang, D-72178 Waldachtal (DE); Bieck, Torsten, D-72280 Dornstetten (DE)

(56) Entgegenhaltungen:
- DE-A- 4 122 472
- DE-U- 9 209 890
- US-A- 4 275 913

## Beschreibung

Die Erfindung betrifft einen in ein Fahrzeug einbaubaren Behälter mit Aufnahmefach, insbesondere zur Brillenablage, bestehend aus einem frontseitig offenen Gehäuse und einem an der offenen Seite verschwenkbar angeordneten Deckel gemäß der Gattung des Anspruches 1.

Für die Aufbewahrung von Tonträgern wie Musikkassetten und Compact Discs in Fahrzeugen sind Behälter bekannt, die aus mehreren, an einer Stirnseite offenen Gehäusen zusammengesetzt sind. In jedem Gehäuse ist ein Schieber eingesetzt, auf dem die Kassette aufgelegt und zur Aufbewahrung in das Gehäuse eingeschoben wird. Zur Entnahme der Kassette wird der mit dem Deckel verbundene Schieber mittels einer Verriegelungstaste entriegelt, wobei eine zwischen Schieberrückwand und Gehäuse angeordnete Druckfeder den Schieber mit der Kassette aus dem Gehäuse in die Entnahmeposition befördert.

Neben der Aufbewahrung von Kassetten ist es häufig erwünscht, auch andere Gegenstände, beispielsweise Brillen, im Fahrzeug aufzubewahren. Es wurden auch schon Brillenablagen vorgeschlagen, die am Armaturenbrett des Fahrzeuges durch Klebstreifen befestigbar oder als Klapplade am Armaturenbrett ausgebildet sind. Siche DE-U-92 09 890.

In der Regel sind diese Brillenablagen als offene Aufnahmefächer gestaltet, in denen die Brille eingelegt wird. Durch die offenen Aufnahmefächer sind die Brillen jedoch nicht staubfrei aufbewahrt. Des weiteren muß das Aufnahmefach zur Halterung der Brille Klemmeinrichtungen aufweisen, die ein Entnehmen bzw. Ablegen der Brille während des Fahrens erschweren. Des weiteren ist aus ästhetischen Gründen sehr häufig eine verdeckte, in das Armaturenbrett des Fahrzeuges integrierbare Ablage erwünscht.

Der Erfindung liegt daher die Aufgabe zugrunde, einen Behälter mit Aufnahmefach, insbesondere zur Brillenablage, zu schaffen, der in einer vorhandenen Öffnung im Fahrzeug einbaubar ist und eine geschlossene, staubsichere und leicht bedienbare Ablage ermöglicht.

Die Lösung dieser Aufgabe wird durch die im Anspruch 1 angegebenen Merkmale erreicht. Durch die gelenkige Anbringung des Aufnahmefachs an dem im Gehäuse geführten und verschiebbaren Schlitten ist es möglich, das Aufnahmefach in der Lagerposition in eine waagrechte und in der Entnahmeposition in eine teilweise aufgerichtete, günstige Stellung zu bringen. Trotz des nach dem Öffnen vorstehenden, zur staubfreien Ablage dienenden Deckels ist damit ein guter Zugriff und Entnahme der Brille möglich. Gleichzeitig wird durch die teilweise aufgerichtete Stellung des Aufnahmefachs in der Entnahmeposition nur ein geringer Platzbedarf benötigt, so daß die Anordnung des Behälters im Armaturenbrett in Reichweite des Fahrers auch im Bereich des Schalthebels möglich ist.

Über ein am Aufnahmefach und Deckel gelenkig angebrachtes Koppelglied wird nach dem Entriegeln des Schlittens das Aufnahmefach über ein Antriebsteil in die Entnahmeposition außerhalb des Gehäuses befördert. Diese zwangsweise und über das Koppelglied gesteuerte Bewegung öffnet einerseits den Deckel und verschiebt den Schlitten mit dem Aufnahmefach in Richtung der frontseitigen Öffnung des Gehäuses. Durch Schließen des Deckels ergibt sich der umgekehrte Bewegungsablauf, der das Aufnahmefach in die Lagerposition zurückführt. Handelt es sich bei dem Antriebsteil um eine zwischen dem Gehäuse und dem Schlitten verspannte Zugfeder, wird diese durch das Verschließen des Deckels verspannt. Als Antriebsteil kann auch ein Elektromotor dienen, der durch Druck auf den Deckel über einen Schalter betätigt wird.

Bei der Verwendung einer Zugfeder als Antriebsteil ist es zweckmäßig, am Schlitten ein Dämpfungselement anzuordnen, das in eine am Gehäuse ausgebildete Zahnstange eingreift. Damit ergibt sich für das Ausfahren des Schlittens und des Aufnahmefachs ein gedämpfter Bewegungsablauf.

Ein klemmfreier und günstiger Bewegungsablauf wird zweckmäßigerweise dadurch erreicht, daß der Steuerzapfen des Koppelgliedes in einem gekrümmten Langloch des Aufnahmefaches geführt ist.

Die Erfindung wird nachfolgend anhand der Zeichnung näher erläutert.

Es zeigen in einer skizzenhaften Darstellung:
- Figur 1: den geschlossenen Behälter in einer Seitenansicht,
- Figur 2: den Behälter nach Fig. 1 in einer Draufsicht,
- Figur 3: den offenen Behälter in einer Seitenansicht und
- Figur 4: den Behälter nach Fig. 3 in einer Draufsicht.

Der Behälter besteht aus einem einseitig offenen Gehäuse 1, an dessen offene Seite ein gelenkig angeordneter und verschwenkbarer Deckel 2 angesetzt ist. Das Koppelglied 3 ist einerseits mit dem Deckel 2 über das Gelenk 4 und andererseits über das Gelenk 5 mit dem Schlitten 6 verbunden. Das Koppelglied 3 weist einen verlängerten und abgewinkelten Hebelarm 7 auf, an dem ein Steuerzapfen 8 angeordnet ist. Dieser Steuerzapfen 8 greift in ein gekrümmtes Langloch 9 des Aufnahmefachs 10 ein.

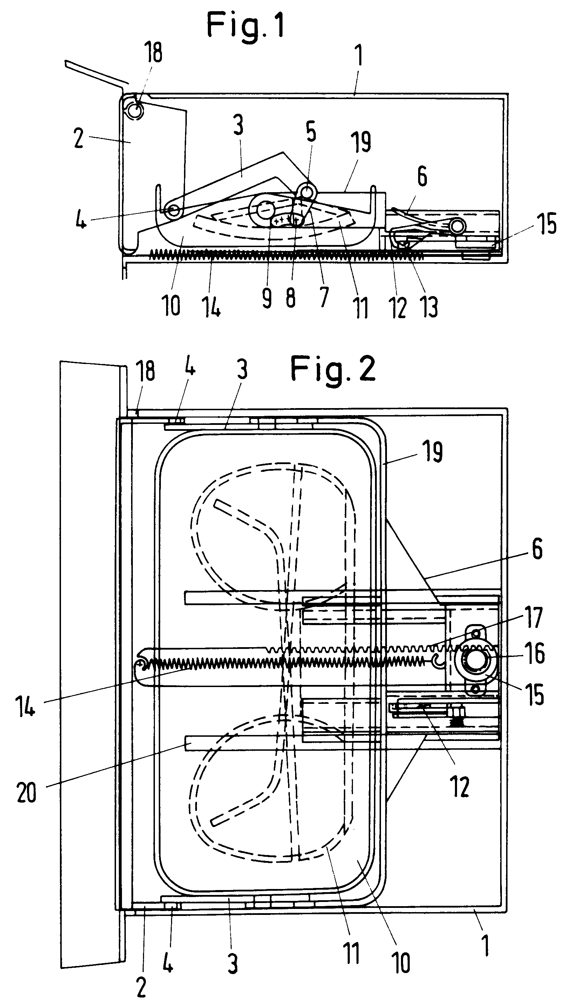

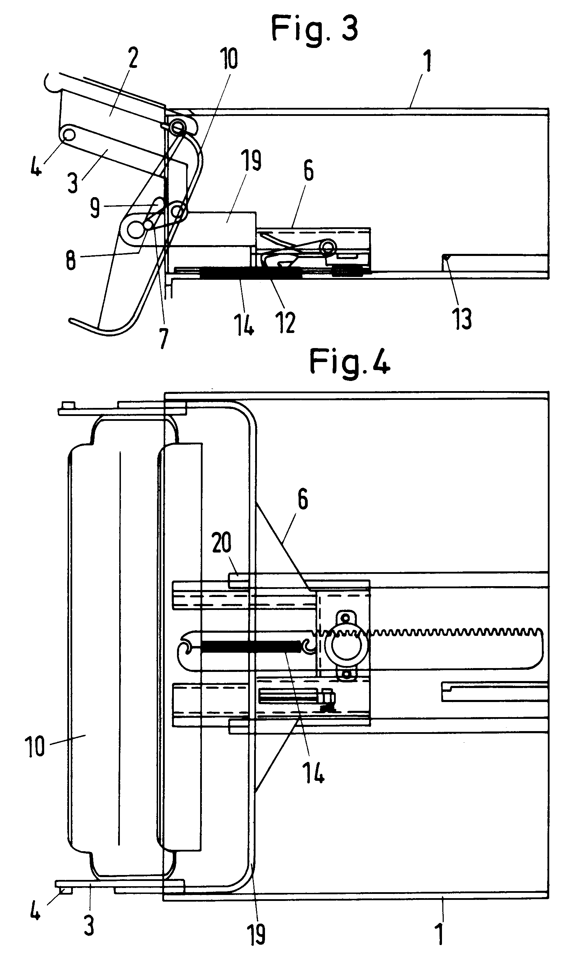

In Figur 1 und 2 ist das Aufnahmefach 10 in der waagrechten und vollständig im Gehäuse befindlichen Lagerposition dargestellt. Bei dieser Lagerposition ist der Deckel 2 geschlossen, so daß sich für die Brille 11 eine staubfreie Ablage ergibt. In dieser Position ist der Schlitten 6 über den Riegel 12 und dem am Gehäuse angeordneten Riegelzapfen 13 verriegelt. Die als Antriebsteil dienende und am Schlitten einerseits sowie am Gehäuse andererseits eingehängte Zugfeder 14 ist in der Lagerposition ausgelenkt, so daß eine Zugspannung entsteht. Durch Druck auf den Deckel 2 wird über das Koppelglied 3 der Schlitten 6 in Richtung Rückseite des Behälters bewegt, so daß der Riegel 12 aus dem Riegelzapfen 13 ausgeklinkt wird. Durch die Zugspannung der Zugfeder 14 wird nun der Schlitten 6 in Richtung der offenen Seite des Gehäuses bewegt. Durch das am Schlitten 6 angeordnete Dämpfungselement 15, dessen Zahnrad 16 in eine am Gehäuse 1 ausgebildete Zahnstange 17 eingreift, wird diese Bewegung des Schlittens 6 gedämpft. Gleichzeitig wird über das Koppelglied 3 der Deckel 2 über den Gelenkpunkt 18 nach oben geschwenkt und der Behälter somit geöffnet. Über den Steuerzapfen 8 wird das gelenkig an dem Gabelteil 19 des Schlittens 6 angehängte Aufnahmefach 10 in die teilweise aufgerichtete Entnahmeposition gemäß Figur 3 und 4 befördert. Trotz des nach oben weggeklappten und das Aufnahmefach abdeckenden Deckels 2 ist die Brille 11 leicht aus dem Aufnahmefach 10 zu entnehmen. Der in Führungsbahnen 20 geführte Schlitten 6 wird durch die Feder 14 gegen die Begrenzungsflächen der Führungsbahn 20 in der Endposition gehalten.

Zum Verschließen des Behälters wird der Deckel 2 nach unten gedrückt. Über das Koppelglied 3 wird dabei der Schlitten 6 wieder zurückgeschoben, bis der Riegel 12 am Riegelzapfen 13 einklinkt. Bei der Rückbewegung des Schlittens wird gleichzeitig die Feder 14 erneut verspannt.

## Patentansprüche

1. In ein Fahrzeug einbaubarer Behälter mit Aufnahmefach, insbesondere zur Brillenablage, bestehend aus einem frontseitig offenen Gehäuse (1) und einem an der offenen Seite verschwenkbar angeordneten Deckel (2), der mit dem Aufnahmefach (10) in der Weise verbunden ist, daß mit dem Öffnen des Deckels das Aufnahmefach aus dem Gehäuse in die Entnahmeposition befördert wird, **dadurch gekennzeichnet**, daß das Aufnahmefach (10) gelenkig an einem im Gehäuse (1) geführten und verriegelbaren Schlitten (6) angeordnet ist, daß an dem Schlitten (6) ein diesen in Richtung der offenen Seite des Gehäuses (1) bewegendes Antriebsteil (14) angreift, und daß das Aufnahmefach (10) mit dem Deckel (2) über ein am Aufnahmefach und Deckel gelenkig gelagertes Koppelglied (3) verbunden ist, dessen mit dem Aufnahmefach (10) verbundener Steuerzapfen (8) das Aufnahmefach außerhalb des Gehäuses in eine teilweise aufgerichtete Entnahmeposition befördert.

2. Behälter nach Anspruch 1, **dadurch gekennzeichnet**, daß das Antriebsteil (14) eine zwischen dem Gehäuse (1) und dem Schlitten (6) verspannte Zugfeder ist.

3. Behälter nach Anspruch 2, **dadurch gekennzeichnet**, daß am Schlitten (6) ein Dämpfungselement (15) angeordnet ist, dessen Zahnrad (16) in eine am Gehäuse (1) ausgebildete Zahnstange (17) eingreift.

4. Behälter nach Anspruch 1, **dadurch gekennzeichnet**, daß der Steuerzapfen (8) des Koppelgliedes (3) in einem gekrümmten Langloch (9) des Aufnahmefaches (10) geführt ist.

## Claims

1. A container with a storage tray, in particular for storing spectacles, for installation in a vehicle, comprising an open-fronted housing (1) and a cover (2) pivotally mounted on the open side and joined to the storage tray (10) in such a manner that as the cover is opened the storage tray is conveyed out of the housing into the removal position, characterized in that the storage tray (10) is hinge-mounted on a slide (6) that is guided and arranged to be locked in the housing (1), the slide (6) is engaged by a drive member (14) moving the slide towards the open side of the housing (1), and the storage tray (10) is joined to the cover (2) by way of a coupling link (3) hinge-mounted on the storage tray and the cover, the control pin (8) of which coupling link is joined to the storage tray (10) and conveys the storage tray outside the housing into a partially upright removal position.

2. A container according to claim 1, characterized in that the drive member (14) is a tension spring tensioned between the housing (1) and the slide (6).

3. A container according to claim 2, characterized in that on the slide (6) there is arranged a damping element (15), the gearwheel (16) of which engages a toothed rack (17) formed on the housing (1).

4. A container according to claim 1, characterized in that the control pin (8) of the coupling link (3) is guided in a curved slot (9) of the storage tray (10).

## Revendications

1. Boîte munie d'une cavité réceptrice et pouvant être intégrée dans un véhicule, en particulier pour le rangement de lunettes, comprenant un corps (1) ouvert frontalement et un couvercle (2) qui est monté pivotant sur le côté ouvert, et est relié à la cavité réceptrice (10) de façon telle que l'ouverture dudit couvercle déplace ladite cavité réceptrice hors du corps, jusqu'à la position de prélèvement, caractérisée par le fait que la cavité réceptrice (10) est disposée, de manière articulée, sur une partie coulissante (6) qui est guidée et peut être verrouillée dans le corps (1) ; par le fait qu'une pièce d'entraînement (14), en prise avec la partie coulissante (6), déplace cette dernière en direction du côté ouvert du corps (1) ; et par le fait que la cavité réceptrice (10) est reliée au couvercle (2) par l'intermédiaire d'un organe d'accouplement (3) qui est monté de manière articulée sur la cavité réceptrice et sur le couvercle, et dont le téton de commande (8), relié à ladite cavité réceptrice (10), déplace cette cavité réceptrice en dehors du corps, jusqu'à une position de prélèvement partiellement dressée.

2. Boîte selon la revendication 1, caractérisée par le fait que la pièce d'entraînement (14) est un ressort de traction bandé entre le corps (1) et la partie coulissante (6).

3. Boîte selon la revendication 2, caractérisée par la présence, sur la partie coulissante (6), d'un élément d'amortissement (15) dont la roue dentée (16) engrène dans une crémaillère (17) ménagée sur le corps (1).

4. Boîte selon la revendication 1, caractérisée par le fait que le téton de commande (8) de l'organe d'accouplement (3) est guidé dans un trou oblong curviligne (9) de la cavité réceptrice (10).
